# EUROPEAN PATENT APPLICATION

(11) **EP 4 186 855 A1**
(43) Date of publication of application: **31.05.2023**
(21) Application number: 22206262.2
(22) Date of filing: 08.11.2022
(51) Int. Cl.: C01B 21/068, C04B 35/584, H01L 23/00

(54) **METHOD OF MANUFACTURING SILICON NITRIDE FILLER FOR THERMAL INTERFACE MATERIAL**

(30) Priority: 25.11.2021 KR 20210164143
(71) Applicant: Cheomdanlab Inc., Gwangju 61012 (KR)
(72) Inventor: JUNG, Kyoung Sun, 31078 Seobuk-gu, Cheonan-si, Chungcheongnam-do 3 (KR); SEO, In Ha, 61092 Buk-gu, Gwangju (KR); LEE, Byeong Hoon, 61268 Buk-gu, Gwangju (KR); JANG, Ha Jun, 62307 Gwangsan-gu, Gwangju (KR); LEE, Yeol Ho, 62279 Gwangsan-gu, Gwangju (KR); OH, Byeong Yun, 61032 Buk-gu, Gwangju (KR); KIM, Mi Ri, 61137 Buk-gu, Gwangju (KR)
(74) Representative: Beck & Rössig European Patent Attorneys

(57) **Abstract**

Proposed is a method of manufacturing a silicon nitride filler for a thermal interface material, the silicon nitride filler being capable of improving thermal conductivity by allowing silicon nitride powder to be evenly mixed when added to a thermal interface material.

## Description

### CROSS REFERENCE TO RELATED APPLICATION

The present application claims priority to Korean Patent Application No. 10-2021-0164143, filed November 25, 2021, the entire contents of which is incorporated herein for all purposes by this reference.

### BACKGROUND OF THE INVENTION

### 1. Field of the Invention

The present invention relates to a method of manufacturing a silicon nitride filler for a thermal interface material. More particularly, the present invention relates to a method of manufacturing a silicon nitride filler for a thermal interface material, the filler being capable of improving thermal conductivity by allowing silicon nitride powder to be evenly mixed when added to the thermal interface material.

### 2. Description of the Related Art

Recently, with active development of various electrical/electronic devices such as smart devices, electric vehicles, LED lights, and power semiconductor devices, various efforts have been made to manage heat from the devices.

In particular, a chip-mounted board dissipates heat through a heat sink attached to the board. A thermal interface material (Tim) is applied between the board and the heat sink to improve thermal conductivity. Typically, the thermal interface material is silicon or grease.

However, conventional thermal interface materials have a problem of low heat dissipation efficiency due to their low thermal conductivity.

Sintered silicon nitride is excellent in wear resistance, thermal resistance, thermal expansion, and thermal shock resistance and imparts corrosion resistance to metal. Therefore, sintered silicon nitride is used in various structural members such as the parts of gas turbines, engines, and steelmaking machines, and is also used as a material for electronic components such as ceramic substrates due to good dielectric properties and heat dissipation properties.

Such sintered silicon nitride is mainly fabricated by imide pyrolysis and direct nitration. The imide pyrolysis is a method of causing reaction between silicon tetrachloride and ammonia to form an imide intermediate and of thermally decomposing the imide intermediate to obtain silicon nitride.

This imide pyrolysis method is currently widely used. The reason is described below. First, it is possible to obtain α-silicon nitride powder having a high α-phase degree, being relatively even in particle size, and having an average particle size of 1 µm or less. Second, α-to-β phase transition occurs during sintering because the sintering temperature of the α-silicon nitride powder is high. This results in a dense sintered body having a relative density greater than 99%.

However, this method is disadvantageous in manufacturing cost and time because the method requires expensive compounds as raw materials, and the manufacturing process is extremely complex.

On the other hand, the direct nitration is a method of obtaining silicon nitride powder by nitrating solid silicon to produce an agglomerate and then pulverizing the agglomerate. This method has the advantage that the raw material is relatively cheap but has a challenge to improve the purity of the silicon nitride powder obtained.

In addition, it is known that the direct nitration is advantageous in that the process can start with small-grain solid silicon because the nitration starts from the surface of the solid silicon and slowly progresses at a low temperature at which the solid silicon does not melt. This method rather has a problem in the pulverization process in which the solid silicon is pulverized to become small grains. In this process, there is a risk that contaminants, i.e., impurities such as metal are introduced into the solid silicon. In addition, when the solid silicon is contaminated, acid washing is required to remove the contaminants before nitration. This increases man hours for manufacturing, manufacturing time, and manufacturing cost.

### SUMMARY OF THE INVENTION

The present invention has been made in view of the problems occurring in the related art, and an objective of the present invention is to provide a method of manufacturing a silicon nitride filler capable of being produced at a relatively low cost and of greatly improving thermal conductivity when added to a thermal interface material.

In order to accomplish the objective of the present invention, there is provided a method of manufacturing a silicon nitride filler capable of improving thermal conductivity when added to a thermal interface material, the method including: mixing a metal silicon powder and a crystal phase control powder for crystalline phase control during direct nitration, to prepare a raw material powder mixture; mixing a solvent and an organic binder with the raw material powder mixture to form a slurry, and spray drying the slurry to produce granules having a predetermined particle size; applying a nitrogen gas to the granules at a predetermined pressure to nitride the granules; pulverizing the nitrated granules to obtain a silicon nitride powder; pulverizing the silicon nitride powder so that the silicon nitride powder has a desired particle size; and mixing the pulverized silicon nitride powder with a boron nitride powder to complete production of the silicon nitride filler.

In a preferred embodiment, the boron nitride powder serves as a releasing agent when the silicon nitride filler is added to a thermal interface material, and the boron nitride powder is added in a content range of 5 wt% to 15 wt%, to the silicon nitride filler.

In a preferred embodiment, the crystal phase control powder includes an yttrium oxide powder and a magnesium oxide powder, and the raw material powder mixture contains 3 mole% to 10 mole% of yttrium oxide and 6 mole% to 15 mole% of magnesium oxide.

In a preferred embodiment, the granules have an average particle size in a range of 60 µm to 120 µm.

In a preferred embodiment, the metal silicon powder is obtained by dry pulverizing a polycrystalline metal silicon scrap or a monocrystalline silicon wafer scrap, in which the average particle size of the metal silicon powder is in a range of 0.5 µm to 4 µm, the average particle size of the yttrium oxide powder is in a range of 0.1 µm to 1 µm, and the average particle size of the magnesium oxide powder is in a range of 0.1 µm to 1 µm.

In a preferred embodiment, during the nitration, the nitrogen gas is applied at a pressure in a range of 0.1 MPa to 0.2 MPa.

In a preferred embodiment, when the nitration is performed, a temperature is elevated to a predetermined temperature from 1000°C or higher at an elevation rate of 0.5°C/min to 10°C/min.

In addition, the present invention further provides a silicon nitride filler for a thermal interface material, the filler being manufactured by the manufacturing method described above.

In addition, the present invention further provides a thermal interface material to which the silicon nitride filler is added.

The present disclosure has the advantages described below.

According to one embodiment of the present invention, there is provided a method of manufacturing a silicon nitride filler for a thermal interface material. The method enables cost-effective production of a silicon nitride powder having a high purity through a direct nitration method. Since a boron nitride powder serves as a releasing agent, when the silicon nitride powder is added to the thermal interface material, the silicon nitride powder can be evenly dispersed, resulting in improvement in thermal conductivity.

### BRIEF DESCRIPTION OF THE DRAWINGS

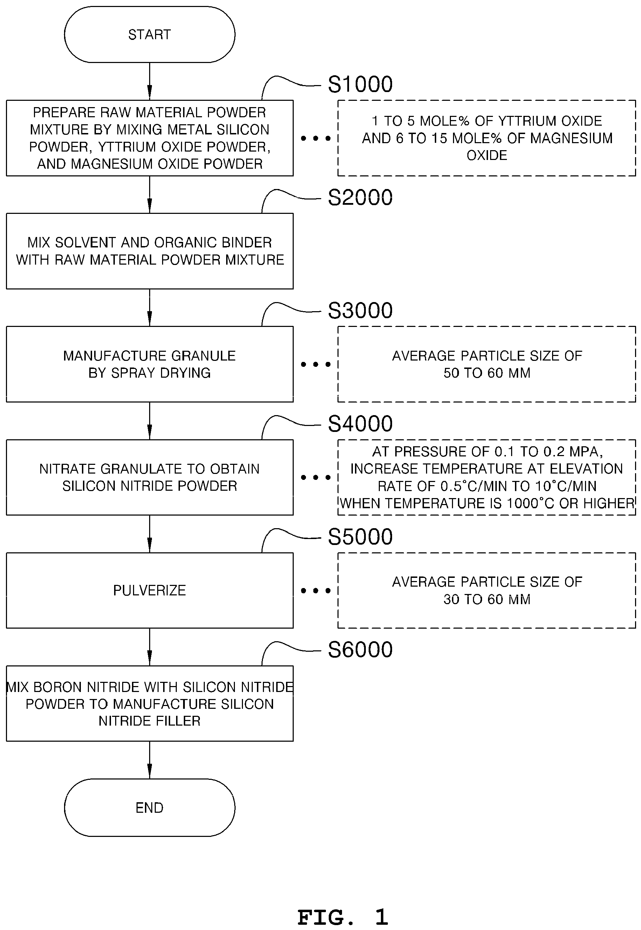

FIG. 1 is a flowchart of a method of manufacturing a silicon nitride filler for a thermal interface material, according to one embodiment of the present invention.

### DESCRIPTION OF THE PREFERRED EMBODIMENTS

As the terms used to describe the present disclosure in the present disclosure, as many general terms as possible are selected. However, in certain cases, terms that are chosen by the inventors of the present disclosure may be used. In such cases, the meanings of the terms should be understood not simply by the name but by the detailed description of the invention.

Hereinafter, the technical aspects of the present disclosure will be described in detail with reference to the preferred embodiments illustrated in the accompanying drawings.

However, the present disclosure is not limited to the embodiments described herein and may be embodied in other forms. Like reference numerals refer to like elements throughout the description herein and the drawings.

FIG. 1 is a flowchart of a method of manufacturing a silicon nitride filler for a thermal interface material, according to one embodiment of the present invention.

Referring to FIG. 1, the silicon nitride filler manufacturing method for a thermal interface material, according to one embodiment of the present includes a step of preparing a raw material powder mixture (step S1000).

When the raw material powder mixture is prepared by mixing a metal silicon powder with a crystal phase control powder for crystal phase control when directly nitrating the metal silicon powder.

The metal silicon powder is not particularly limited if a silicon nitride powder can be formed from the metal silicon powder through direct nitration. For example, the metal silicon powder may be powder obtained by pulverizing a polycrystalline metal silicon scrap or a monocrystalline silicon wafer scrap.

The polycrystalline metal silicon scrap may be a by-product of production of polycrystalline metal silicon for semiconductor device manufacturing tools or a by-product of production of polycrystalline metal silicon for solar panels, and the monocrystalline silicon wafer scrap may be a by-product of production of silicon wafers.

In addition, it is preferable that the polycrystalline metal silicon scrap and the monocrystalline silicon wafer scrap have a purity of 99% or greater because such a high purity is advantageous in reducing the thermal conductivity and mechanical strength of a silicon nitride powder during sintering.

In addition, it is preferable that the polycrystalline metal silicon scrap and the monocrystalline silicon wafer scrap be pulverized in a dry pulverization manner to prevent contaminants from being introduced into the raw material powder mixture during the pulverization. Specifically, the polycrystalline metal scrap or the monocrystalline silicon wafer scrap may be dry pulverized using a disk mill, a pin mill, a jet mill, or the like. When contaminants are contained in the powder, the powder needs to undergo a cleaning process such as acid washing. In this case, there is a concern that manufacturing time and cost increase.

In this case, the average particle size of the metal silicon powder to be pulverized may be in a range of 0.5 µm to 4 µm and more preferably in a range of 2 µm to 4 µm. When the average particle size is smaller than 0.5 µm, it may be difficult to use a dry pulverization method. In addition, contaminants may be easily introduced into the powder due to microparticulation. In addition, it may be difficult to achieve densification during sheet casting. When the average particle size exceeds 4 µm, it is not easy to nitride the metal silicon powder, resulting a risk that a not-nitrated portion remains.

On the other hand, since silicon nitride is difficult to self-diffuse and can pyrolyze at high temperatures, the sintering temperature is limited so that it is difficult to obtain a dense sintered body. In addition, it is difficult to control the crystal phase when manufacturing a silicon nitride powder through direct nitration. To solve these problems, the crystalline phase control powder is added.

The crystal phase control powder may be a rare earth element-containing compound, an alkaline earth metal oxide, or a combination thereof. Specifically, as the crystal phase control powder, one or more materials selected from the group consisting of magnesium oxide (MgO), yttrium oxide (Y₂O₃), gadolinium oxide (Gd₂O), holmium oxide (Ho₂O₃), erbium oxide (Er₂O₃), ytterbium oxide (Yb₂O₃₎, and dysprosium oxide (Dy₂O₃) may be used.

In the present invention, the crystal phase control powder includes an yttrium oxide powder and a magnesium oxide powder as essential components. The crystal phase control powder has an advantage of reducing the amount of residual grain phase during sintering, thereby improving the thermal conductivity.

In addition, in the mixed raw powder, yttrium oxide is contained in an amount of 3 mole% to 10 mole% and magnesium oxide is contained in an amount of 6 mole% to 15 mole%.

When the content of the yttrium oxide is lower than 3 mole%, it is difficult to densify the silicon nitride powder, and it is difficult to capture oxygen in the grains. Therefore, the amount of oxygen dissolved in the thermal interface material is large, so that the thermal conductivity of the thermal interface material is low. In addition, when the content of the yttrium oxide exceeds 10 mole%, there is a problem that the thermal conductivity of the silicon nitride powder is reduced due to a large number of granular phases.

In addition, when the content of the magnesium oxide is lower than 6 mole%, both the thermal conductivity and the mechanical strength of the silicon nitride powder may be low, and thus silicon may ooze during the silicon nitration. When the content of the magnesium oxide exceeds 15 mole%, the magnesium oxide residue in the grain may be high, so that the thermal conductivity of the silicon nitride powder may be lowered, and the silicon nitride powder may not be easily sintered.

In addition, the average particle size of the yttrium oxide powder may be in a range of 0.1 µm to 1 µm, and the average particle size of the magnesium oxide powder may be in a range of 0.1 µm to 1 µm. When these requirements are satisfied, nitration can be easily performed.

Next, a solvent and an organic binder are added to the silicon powder to form a slurry in step S2000.

Next, the slurry is spray dried to form granules having a predetermined particle size in step S3000.

On the other hand, the raw material powder mixture is not directly nitrated but is nitrated after undergoing granulation, to improve mixing uniformity of the mixture. When uniformly mixed, the crystal phase of the silicon nitride powder produced can be easily controlled, and a secondary phase Si₂Y₂O₅ can be formed. As a result, the thermal conductivity of the thermal interface material can be improved.

In addition, it is preferable that the granules have a particle size in a range of 60 µm to 120 µm. When the particle size exceeds 120 µm, the nitrogen gas cannot be easily introduced into the granules, so that the silicon granules cannot be completely nitrated, and the remaining not-nitrated silicon melts and oozes out of the granules.

The granules can be obtained by known dry spraying methods, and there are no particular restrictions on the types of the solvent and organic binder. For example, it is preferred that the solvent includes one or more materials selected from among ethanol, methanol, isopropanol, distilled water, and acetone. Specifically, it is preferable that the organic binder is a polyvinylbutyral (PVB)-based binder.

Next, the obtained granules are subjected to a nitration treatment in which a nitrogen gas is supplied at a predetermined pressure to the granules while the temperature is maintained in a range of 1200°C to 1500°C in step S4000.

In the nitration treatment, the nitrogen gas may be supplied at a pressure of 0.1 MPa to 0.2 MPa, and more preferably at a pressure of 0.15 MPa to 0.17 MPa. When the pressure of the nitrogen gas is lower than 0.1 MPa, the granules may not be completely nitrated. When the pressure of the nitrogen gas exceeds 0.2 MPa, silicon oozes during the nitration treatment.

In addition, when the nitration treatment is performed, the temperature may be elevated to a predetermined temperature from 1000°C or higher at an elevation rate of 0.5°C/min to 10°C/min. When the elevation rate is lower than 0.5°C/min when the temperature is elevated to the predetermined temperature from 1000°C or higher, the sintering time may be excessively long. On the other hand, when the elevation rate exceeds 10°C/min, the silicon oozes, and thus it is difficult to prepare a silicon nitride powder.

The nitration treatment may be performed at the predetermined temperature within a range of 1200°C to 1500°C. The nitration may not occur uniformly when the predetermined temperature is lower than 1200°C. When the predetermined temperature exceeds 1500°C, β crystalline phase may be formed rapidly. Therefore, it is difficult to densify silicon nitride through the nitration treatment. In addition, the nitration may be performed at the predetermined temperature for a duration in a range of 30 minutes to 5 hours.

The resulting silicon nitride powder is then pulverized to have a desired particle size in step S5000.

The average particle size of the silicon nitride powder to be pulverized is in a range of 30 µm to 60 µm.

Next, a silicon nitride filler for a thermal interface material is prepared by mixing a boron nitride powder with the pulverized silicon nitride powder in step S6000.

The silicon nitride powder and the boron nitride powder are mixed evenly using a mixer such as a V-mixer, and the silicon nitride filler is provided in a powder form.

The boron nitride powder functions as a releasing agent that prevents the silicon nitride powder from agglomerating when the silicon nitride powder is added to a thermal interface material. The boron nitride powder is contained in the silicon nitride filler in an amount of 5 wt% to 15 wt%.

The boron nitride powder is mixed in an amount in a range of 5 wt% to 15 wt% because when the content of the boron nitride powder exceeds 15 wt%, the silicon granules come into contact with each other during the nitration treatment, and thus sintering occurs. This makes final pulverization difficult.

Preferably, the boron nitride powder may have an average particle size in a range of 1 µm to 5 µm.

In addition, the boron nitride powder is formed to have a particle size of 1 µm to 5 µm to maximize the filling rate. That is, when the boron nitride powder has a particle size of 1 µm to 5 µm, and the silicon nitride powder has an average particle size of 30 µm to 60 µm, the boron nitride particles can be easily introduced into the voids between the silicon nitride particles. Thus, the filling rate can be maximized. In addition, since the boron nitride has a relatively high thermal conductivity of 100 W/mk, the boron nitride powder having such a particle size is effective in increasing thermal conductivity.

In the case of using the method of manufacturing a silicon nitride filler for a thermal interface material, according to one embodiment of the present invention, it is possible to cost-effectively produce a silicon nitride powder having a high purity through a direct nitration method. When the silicon nitride powder is added to a thermal interface material, the silicon nitride power can be uniformly dispersed by the boron nitride powder. Therefore, the thermal conductivity of the thermal interface material can be improved.

Although the present invention has been described with reference to the preferred example, the ordinarily skilled in the art will appreciate that the present invention is not limited to the example described above and can be diversely changed and modified without departing from the scope of the spirit of the present invention.

## Claims

1. A method of manufacturing a silicon nitride filler for improving thermal conductivity by being added to a thermal interface material, the method comprising:
mixing a metal silicon powder and a crystal phase control powder for crystal phase control during direct nitration to prepare a raw material powder mixture;
mixing a solvent and an organic binder with the raw material powder mixture to form a slurry, and spray drying the slurry to produce granules having a predetermined particle size;
applying a nitrogen gas at a predetermined pressure to the granules for nitration of the granules;
pulverizing the nitrated granules to obtain a silicon nitride powder;
pulverizing the silicon nitride powder to a desired particle size; and
mixing the pulverized silicon nitride powder with a boron nitride powder to complete preparation of the silicon nitride filler,
wherein the boron nitride powder serves as a releasing agent that uniformly disperses the silicon nitride powder when the silicon nitride filler is added to the thermal interface material, thereby improving thermal conductivity, and the boron nitride powder is mixed in an amount in a range of 5 wt% to 15 wt%, in the silicon nitride filler.

2. The method according to claim 1, wherein the crystal phase control powder comprises an yttrium oxide powder and a magnesium oxide powder, and the raw material powder mixture contains 3 mole% to 10 mole% of yttrium oxide and 6 mole% to 15 mole% of magnesium oxide.

3. The method according to claim 1 or 2, wherein the granules have an average particle size in a range of 60 µm to 120 µm.

4. The method according to one of claims 1 to 3, wherein the metal silicon powder is powder obtained by dry pulverizing a polycrystalline metal silicon scrap or a monocrystalline silicon wafer scrap, and
wherein the metal silicon powder has an average particle size in a range of 0.5 µm to 4 µm, the yttrium oxide powder has an average particle size in a range of 0.1 µm to 1 µm, and the magnesium oxide powder has an average particle size in a range of 0.1 µm to 1 µm.

5. The method according to one of claims 1 to 4, wherein during the nitration, the nitrogen gas is applied at a pressure in a range of 0.1 MPa to 0.2 MPa.

6. The method according to claim 5, wherein during the nitration, a temperature is elevated to a predetermined temperature from 1000°C or higher at an elevation rate of 0.5°C/min to 10°C/min.

7. A silicon nitride filler for a thermal interface material, the filler being manufactured by any one method of claims 1 to 6.
